# EUROPEAN PATENT APPLICATION

(11) **EP 4 393 979 A1**
(43) Date of publication of application: **03.07.2024**
(21) Application number: 22383305.4
(22) Date of filing: 28.12.2022
(51) Int. Cl.: C08G 65/336, C08K 3/08, C08K 3/22, C09D 5/16

(54) **BIFUNCTIONAL POLYFLUOROPOLYETHER SILANES AS ANTI-INSECT ADHESION AGENT**

(71) Applicant: Fundación Cidetec, 20014 Donostia-San Sebastián (ES); L'Universite de Mons (UMONS), 7000 Mons (BE)
(72) Inventor: FENERO BISQUER, Marta, 20014 SAN SEBASTIÁN (ES); KOSTA PÉREZ, Ivet, 20011 SAN SEBASTIÁN (ES); PALENZUELA CONDE, Jesús, 46007 VALENCIA (ES); WATTIEZ, RUDDY, B- 7332 SIRAULT (BE); DECROO, Corentin, B-7050 HERCHIES (BE); MARTINET, Baptiste, 7618 TAINTIGNIES (BE)
(74) Representative: ZBM Patents - Zea, Barlocci & Markvardsen

(57) **Abstract**

The present invention relates to a bifunctional perfluoropolyether silanes or a combination of bifunctional perfluoropolyether silanes and one or more metals, inorganic oxides, and mixtures thereof as anti-insect adhesion agent; particularly as a haemolymph anticoagulant agent; and a composition comprising the bifunctional perfluoropolyether silane and one or more metals, inorganic oxides, and mixtures thereof, and it use of as anti-insect adhesion agent. The invention also refers to a method for reducing the adhesion of insects on a surface which comprising the use of the bifunctional perfluoropolyether silane, the combination of bifunctional perfluoropolyether silanes and one or more metals, inorganic oxides, and mixtures thereof or the composition comprising it.

## Description

The present invention generally relates to durable, low- adhesion materials, coatings, and systems. In particular, to bifunctional polyfluoropolyether silanes that inhibit the haemolymph coagulation having low adhesion and easy-to-clean properties as anti-insect adhesion agent.

### Background Art

Materials can become soiled from debris (particles, insects, oils, etc.) impacting the surface. The debris can affect both the functionality and efficiency of the materials, as well as the aesthetics. Furthermore, the cleaning and/or restoration (if required) of the materials affect the cost and also reduce the useful half-life of said material. Particularly, the effect of insect impacting residue on the surface of transport media is of special interest. Generally, insect impact residue affects vehicle fuel economy, aesthetics, and operator vision. On aircraft, insect residue interferes with airflow over a surface, increasing drag and thus fuel consumption. On automobiles, the light dispersion of headlights, operator vision through windshield, and aesthetic appeal are degraded from insect remains.

Many strategies to reduce/solve the insect debris impact have been disclosed in the state of the art. Some of the attempts to mitigate insect impact and accumulation of debris include the use of mechanical scrapers, deflectors, insect traps, detachable sacrificial surfaces, dissolvable film surfaces, elastic surfaces, viscous surface fluids, suction slots, and washing the surface continually with fluid. The results of most of these trials were determined ineffective or impractical for commercial use.

One of this approach to this problem was the use of a self-cleaning coating layer on the material that removes debris from itself by controlling chemical interactions between the debris and the surface. Said passive coatings reduce insect debris and do not require the wiring and energy of active systems. However, most of said passive coatings provided insufficient residue reduction being commercially unviable.

Due to this fact, attempts were performed by the use of superhydrophobic (and preferably also super-oleophobic) surfaces. In particular, superhydrophobic and super-oleophobic coated surfaces create very high contact angles between the surface and drops of water and oil, respectively; resulting in the fact that drops roll off the surface rather than remaining on the surface. However, these superhydrophobic and super-oleophobic coatings do not repel solid contaminant material in dry conditions. Therefore, contrary to water or oil drops, when insects impact on the surface, insect debris will remain on the surface and render it ineffective. Also, these surfaces lose function if the micro/nanostructured top surface is scratched.

To solve this problem, the introduction inside the coating material of substances that reduce the contact between the insect residues and the surface have been disclosed in the state of the art. In particular, enzyme-filled (superhydrophobic and super-oleophobic) coatings have been developed. In this situation, the leaking of the enzymes from the coating allows dissolving the debris positioned on the surface. However, enzymes are quickly depleted and cannot be refilled, rendering this approach also impractical.

Then, polymeric sol-gel superhydrophobic coatings have been used as alternative approach to reduce insect adhesion after impact. However, the best-performing materials were those having a high-roughness that, unfortunately, did not allow the self-removal of the debris from the superhydrophobic surfaces once insects broke on the surface.

Other alternative is the use of polymeric materials having low surface energies and widely used as non-stick coatings. In particular, fluoropolymer based coatings having low surface energies and liquid repellence were investigated. In the same way, attempts with polymers containing low energy perfluoropolyethers and perfluoroalkyl groups has been disclosed in the state of the art. However, thought these low energy perfluoropolyethers containing polymers facilitate release of materials adhering to them in both air and water, they do not provide a lubricated surface to promote clearance of solid foreign substances attached to it, such as debris after insect impacts. In fact, the debris remain sticked on the surface of the material even of their use.

Therefore, from what is known in the art it is derived that there is still the need of providing a highly durable and easy-to-clean coating agent having anti-adhesion insect properties.

### Summary of Invention

Inventors have surprisingly found that one or more perfluoropolyether polymers that comprises two amido containing silane moieties placed each one at one end of the compound as shown in formula (I) is useful as anti-adhesion insect agent having appropriate durability and easy-to-clean properties. In particular, it is found that the bifunctional perfluoropolyether of formula (I) delay the haemolymph coagulation, which in turn diminish unexpectedly the adhesion of haemolymph proteins debris attached on the surface after insect impacting and having also easy-to-clean properties since the coating maintain its hydrophobic and oleophobic properties. In fact, as it is demonstrated in the experimental section that only the perfluoropolyethers of formula (I) that include the two amido containing silane moieties in each terminal ends of the polymer are capable of being use as effective anti-insect adhesion agent having easy-to-clean debris properties.

Furthermore, the inventors have also found that the combination of one or more bifunctional perfluoropolyether of formula (I) and one or more metals, one or more inorganic metal or metalloid oxide or mixtures thereof has an unexpected enhanced antiadhesion effect of solid debris, particularly insect debris after impacting without sacrificing the cleaning properties against liquids (water and oil). In fact, as it is demonstrated in the experimental section, the combination of the compound of formula (I) and metal, inorganic metal oxide, and or inorganic metalloid oxide allows reducing unexpectedly between 5 and 10% more the amount of adsorbed haemolymph proteins than the bifunctional perfluoropolyether of formula (I) alone.

Finally, the use of the perfluoropolyether of formula (I) alone or its combination with one or more metals, and/or inorganic metal or metalloid oxide (particularly inorganic metal oxide; such as cerium oxide) is specially advantageous because is durable, easy to handle, economic and versatile.

Thus, the first aspect of the invention refers to the use of one or more perfluoropolyethers of formula (I) 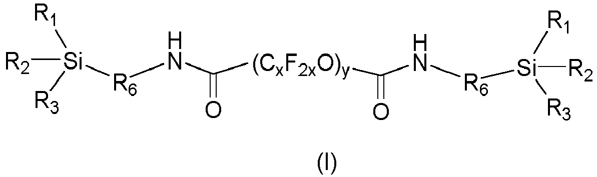 or alternatively,
use of a combination of one or more perfluoropolyethers of formula (I) and one or more metals, inorganic oxides, and mixtures thereof;
as an anti-insect adhesion agent;
wherein:
   x is an integer from 1 to 6;
   y is an integer from 2 to 500;
   each R₁, R₂, and R₃ are independently selected from the group consisting of halogen, - OH, -(C₁-C₃₀)alkyl, and -O(C₁-C₃₀)alkyl, with the proviso that at least one of R₁, R₂ or R₃ is -OH or -O(C₁-C₃₀)alkyl;
   R₆ is selected from the group consisting of (CR₇R₈)ₚ and (CR₉R₁₀O)_{q};
   each R₇, R₈, R₉ and R₁₀ are independently selected from the group consisting of H, -(C₁-C₁₂)alkyl; -(C₂-C₁₂)alkenyl; -(C₂-C₁₂) alkylene-O-(Y-O)_{w}-(C₁-C₁₂)alquil, -(C₂-C₁₂) alkylene-O-(Y-O)_{w}-(C₂-C₁₂)alkylene-NR₁₁R₁₃, -(C₂-C₆)alkynyl; -Cy1; -(C₁-C₁₂)alkylene-Cy1; -(C₂-C₁₂)alkenylene-Cy1; -(C₂-C₁₂)alkynylene-Cy1; -Cy2-(C₁-C₁₂)alkyl; -Cy2-(C₂-C₁₂)alkenyl; and -Cy2-(C₂-C₁₂)alkynyl; being Cy1 a known ring system independently selected from the group consisting of 5- to 7-membered saturated or partially unsaturated carbocyclic or heterocyclic ring; and 5- to 7-membered carbocyclic or heterocyclic aromatic ring; Cy2 a bivalent known ring system independently selected from the group consisting of 5- to 7-membered saturated or partially unsaturated carbocyclic or heterocyclic ring; and 5- to 7-membered carbocyclic or heterocyclic aromatic ring; and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl;
   p is an integer from 1 to 20;
   q is an integer from 1 to 20; and
   the inorganic oxide is selected from the group consisting of metal oxide, metalloid oxide, and mixtures thereof.

The second aspect of the invention refers to a composition comprising (a) one or more perfluoropolyethers of formula (I) as defined in the first aspect of the invention; (b) one or more metals, inorganic oxides, and mixtures thereof; and (c) optionally, one or more excipients or carriers.

The third aspect of the invention refers to a method for reducing the adhesion of insects on a surface which comprises coating the surface with: the one or more perfluoropolyether, or the combination of said perfluoropolyether and one or more metals, inorganic oxides, and mixtures thereof (particularly inorganic metal oxide, such as cerium oxide) as defined in the first aspect of the invention; or the composition as defined in the second aspect of the invention.

Finally, the fourth aspect of the invention refers to a coated substrate obtainable by a process comprising: i) depositing the combination of perfluoropolyether and one or more metals, inorganic oxides and mixtures thereof (particularly inorganic metal oxide, such as cerium oxide) as defined in the first aspect of the invention; or alternatively, the composition comprising perfluoropolyether and one or more metals, inorganic oxides and mixtures thereof (particularly inorganic metal oxide, such as cerium oxide) as defined in the second of the invention over the substrate; and ii) optionally, curing the coating obtained in step i).

### Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

For the purposes of the present invention, any ranges given include both the lower and the upper endpoints of the range. Ranges given, such as temperatures, times, weights, and the like, should be considered approximate, unless specifically stated. The term "about" or "around" as used herein refers to a range of values ± 10% of a specified value. For example, the expression "about 0.5" or "around 0.5" includes ± 10% of 0.5, i.e. from 0.45 to 0.55.

The terms "percentage (%) by weight" or "% w/w" have the same meaning and are used interchangeable. The term "percentage by weight" refers to the percentage of an ingredient/component/compound in relation to the total weight of the final composition/mixture/product/resin/composite.

As it has been stated above, the present invention provides the use of one or more perfluoropolyethers of formula (I) or a combination of said perfluoropolyethers of formula (I) with one or more metals, inorganic oxides, and mixtures thereof (particularly inorganic metal oxide, such as cerium oxide) as an anti-insect adhesion agent.

The term "anti-insect adhesion" agent refers to an agent that reduce the adhesion of the impacting bodies of arthropods having haemophile on a surface. As it is mentioned above, the perfluoropolyether of formula (I) delay the coagulation of haemolymph. In an embodiment, the perfluoropolyether of formula (I) is useful as anti-insect adhesion agent being a haemolymph anticoagulant agent.

As used herein, the term "moiety" refers to a portion or fragment of a compound or molecule. Thus, a perfluoropolyether polymer that comprises "two amido containing silane moieties placed each one at one end of the compound" refers to a perfluoropolyether having two functional silane groups, which each group is chemically attached to each end of the perfluoropolyether.

For the purpose of the present invention, the first aspect refers to the use of one or more perfluoropolyethers having the formula (I) as anti-insect adhesion agent 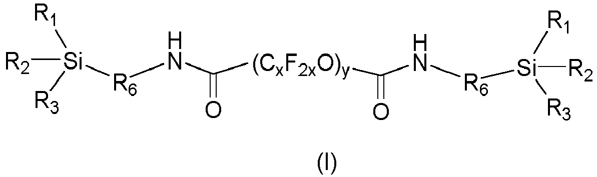 wherein:
x is an integer from 1 to 6;
y is an integer from 2 to 500;
each R₁, R₂, and R₃ are independently selected from the group consisting of halogen, - OH, -(C₁-C₃₀)alkyl, and -O(C₁-C₃₀)alkyl, with the proviso that at least one of R₁, R₂ or R₃ is -OH or -O(C₁-C₃₀)alkyl;
R₆ is selected from the group consisting of (CR₇R₈)ₚ and (CR₉R₁₀O)_{q};
each R₇, R₈, R₉ and R₁₀ are independently selected from the group consisting of H, -(C₁-C₁₂)alkyl; -(C₂-C₁₂)alkenyl; -(C₂-C₁₂) alkylene-O-(Y-O)_{w}-(C₁-C₁₂)alquil, -(C₂-C₁₂) alkylene-O-(Y-O)_{w}-(C₂-C₁₂)alkylene-NR₁₁R₁₃, -(C₂-C₆)alkynyl; -Cy1; -(C₁-C₁₂)alkylene-Cy1; -(C₂-C₁₂)alkenylene-Cy1; -(C₂-C₁₂)alkynylene-Cy1; -Cy2-(C₁-C₁₂)alkyl; -Cy2-(C₂-C₁₂)alkenyl; and -Cy2-(C₂-C₁₂)alkynyl; being Cy1 a known ring system independently selected from the group consisting of 5- to 7-membered saturated or partially unsaturated carbocyclic or heterocyclic ring; and 5- to 7-membered carbocyclic or heterocyclic aromatic ring; Cy2 a bivalent known ring system independently selected from the group consisting of 5- to 7-membered saturated or partially unsaturated carbocyclic or heterocyclic ring; and 5- to 7-membered carbocyclic or heterocyclic aromatic ring; and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl;
p is an integer from 1 to 20;
q is an integer from 1 to 20; and
the inorganic oxide is selected from the group consisting of metal oxide, metalloid oxide, and mixtures thereof.

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, and tert-butyl.

And the term "halogen" refers to fluorine, chlorine, and bromine.

The term "alkenyl" refers to a straight or branched hydrocarbon chain which contains the number of carbon atoms specified in the description or claims and having at least one carbon-carbon double bond. Examples include, among others, ethenyl, 2-propenyl, and 3-hexenyl. As disclosed above, the alkenyl groups can be optionally substituted.

The term "alkynyl" refers to a straight or branched hydrocarbon chain which contains the number of carbon atoms specified in the description or claims and having at least one carbon-carbon triple bond. Examples include, among others, ethynyl, 2-propynyl, and 3-hexynyl. As disclosed above, the alkynyl groups can be optionally substituted.

The term "-(C₁-C₁₂)alkylene-" refers to a bivalent saturated straight, or branched hydrocarbon chain which contains the number of carbon atoms specified in the description or claims.

The term "alkenylene" refers to a bivalent straight or branched hydrocarbon chain which contains the number of carbon atoms specified in the description or claims and having at least one carbon-carbon double bond.

The term "alkynylene" refers to a bivalent straight or branched hydrocarbon chain which contains the number of carbon atoms specified in the description or claims and having at least one carbon-carbon triple bond.

The term "carbocyclic ring" refers to a known saturated, partially unsaturated; or aromatic ring system comprising one or more rings and having the number of carbon atoms specified in the description or claims, wherein all ring members are carbon atoms. As disclosed above, the ring members can be optionally substituted.

The term "heterocyclic ring" refers to a known saturated, partially unsaturated; or aromatic ring system comprising one or more rings and having the number of carbon atoms specified in the description or claims, wherein one or more of the ring members, preferably 1, 2, 3, or 4 ring members, are selected from NH, N, O, and S, and are chemically possible; and the remaining members of the ring are carbon atoms. In the case of a ring system containing a CH member and a NH member, the ring may be attached to the rest of the molecule through the C or the N atom. As disclosed above, the ring members can be optionally substituted.

Non limiting examples of Cy1 include, but not limited to, phenyl and naphthyl, furan-2-yl, furan-3-yl, thiophen-2-yl, thiophen-2-yl, indol-2-yl, imidazolyl, isothiazolyl, isoxazolyl, oxazolyl, pyrazolyl, 2-pyridyl, 3-pyridyl, pyrrolyl, tetrazolyl, thiadiazolyl, thiazolyl, and triazolyl.

For the purpose of the invention, the term "bivalent" refer to a moiety that is bond to two other moieties.

In an embodiment, the perfluoropolyether of formula (I) is one wherein:
x is an integer from 1 to 6;
y is an integer from 2 to 500;
R₆ is (CR₇R₈)ₚ;
each R₇, and R₈ are independently selected from the group consisting of H, -(C₁-C₁₂)alkyl; and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl;
R₁, R₂, and R₃ are -O(C₁-C₃₀)alkyl; and
p is an integer selected from 1 to 20.

In an embodiment, the perfluoropolyether of formula (I) is one wherein:
x is an integer from 1 to 6;
y is an integer from 2 to 500;
R₆ is (CR₇R₈)ₚ;
R₇ and R₈ are H;
R₁, R₂, and R₃ are -O(C₁-C₃₀)alkyl;
each R₁, R₂, and R₃ are independently -O(C₁-C₃₀)alkyl; and
p is an integer from 1 to 6.

In an embodiment, the perfluoropolyether of formula (I) is one wherein: (CxF2xO)y is a moiety of formula (II) 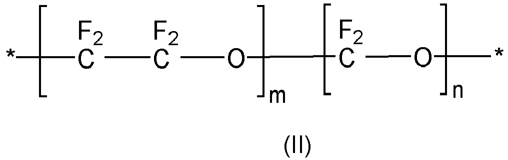
m is an integer from 0 to 500; and
n is an integer from 0 to 500,
with the proviso that:
   when one of m or n is 0, then the other of m or n is other than 0, and
   being the sum of m+n up to 500.

In an embodiment, the perfluoropolyether of formula (I) is one wherein: (CxF2xO)y is a moiety of formula (III) 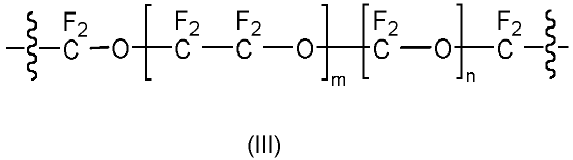
m is an integer from 0 to 500; and
n is an integer from 0 to 500,
with the proviso that:
   when one of m or n is 0, then the other of m or n is other than 0, and
   being the sum of m+n up to 500.

In an embodiment, the perfluoropolyether of formula (I) is one of formula (IA) 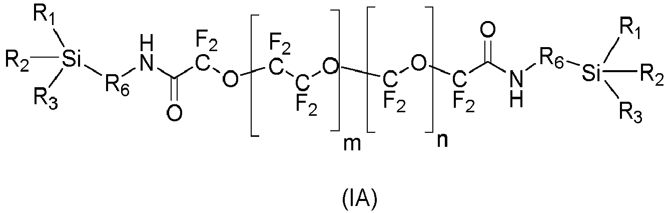 wherein
R₁, R₂, R₃, R₆, m, and n are as defined herein above and below.

In an embodiment, the perfluoropolyether of formula (I) is one of formula (IA) as defined herein above and below, wherein: R₆ is (CR₇R₈)ₚ; p and R₁, R₂, R₃, R₇ and R₈ are as defined herein above and below.

In an embodiment, the perfluoropolyether of formula (I) is one of formula (IA) as defined herein above and below, wherein: R₆ is (CR₇R₈)ₚ; each R₇, and R₈ are independently selected from the group consisting of H, -(C₁-C₁₂)alkyl; and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl; R₁, R₂, and R₃ are -O(C₁-C₃₀)alkyl; and p is an integer selected from 1 to 6.

In an embodiment, the perfluoropolyether of formula (I) is one of formula (IA) as defined herein above and below, wherein: R₆ is (CR₇R₈)ₚ; R₇ and R₈ are H; R₁, R₂, and R₃ are -O(C₁-C₃₀)alkyl; each R₁, R₂, and R₃ are independently -O(C₁-C₃₀)alkyl; and p is an integer from 1 to 6.

In an embodiment, the perfluoropolyether of formula (I) is one of formula (IB) 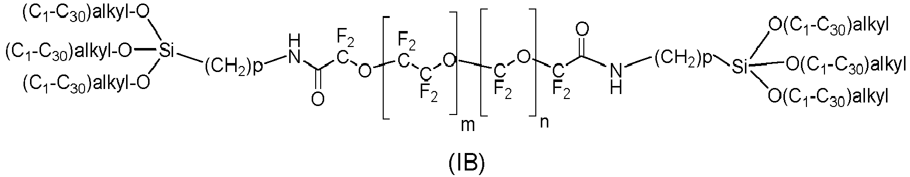 wherein:
m is an integer from 0 to 400;
n is an integer from 0 to 400;
with the proviso that when one of m or n is 0, then the other of m or n is other than 0;
being the sum of m+n up to 400; and
p is an integer from 1-6.

In an embodiment, the perfluoropolyether of formula (I) is one of formula (IC) 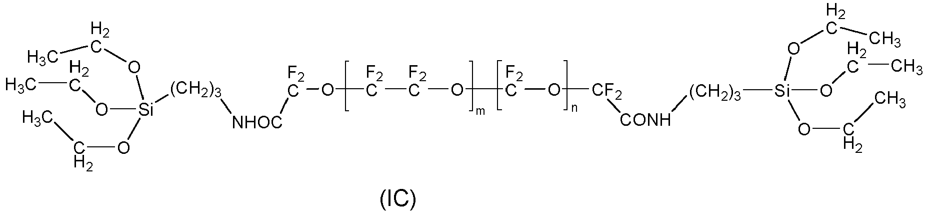 wherein:
m is an integer from 0 to 400;
n is an integer from 0 to 400; and
with the proviso that when one of m or n is 0, then the other of m or n is other than 0, and being the sum of m+n up to 400.

In an embodiment, the perfluoropolyether as defined herein below and above, (particularly compounds of formula (IA), (IB), and (IC)) is one wherein:
m is an integer from 0 to 200;
n is an integer from 0 to 200;
with the proviso that when one of m or n is 0, then the other of m or n is other than 0, and
being the sum of m+n up to 200;

In an embodiment, the perfluoropolyether as defined herein below and above, (particularly compounds of formula (IA), (IB), and (IC)) is one wherein:
m is an integer from 0 to 100;
n is an integer from 0 to 100;
with the proviso that when one of m or n is 0, then the other of m or n is other than 0, and
being the sum of m+n from 3 to 100.

In an embodiment, the perfluoropolyether as defined herein below and above, (particularly compounds of formula (IA), (IB), and (IC)) is one wherein:
m is an integer from 0 to 20;
n is an integer from 0 to 20;
with the proviso that when one of m or n is 0, then the other of m or n is other than 0, and
being the sum of m+n from 4 to 20.

In an embodiment, the perfluoropolyether as defined herein below and above, (particularly compounds of formula (IA), (IB), and (IC)) is one wherein:
m is an integer from 0 to 15;
n is an integer from 0 to 15;
with the proviso that when one of m or n is 0, then the other of m or n is other than 0, and
being the sum of m+n from 6 to 15.

In an embodiment, the perfluoropolyether as defined herein below and above, (particularly compounds of formula (IA), (IB), and (IC)) is one wherein:
m is an integer from 0 to 13;
n is an integer from 0 to 13;
with the proviso that when one of m or n is 0, then the other of m or n is other than 0, and
being the sum of m+n from 9 to 13.

In an embodiment, the perfluoropolyether as defined herein below and above, (particularly compounds of formula (IA), (IB), and (IC)) is one wherein the weight ratio between m and n is from 0.5 to 2. In an embodiment, the perfluoropolyether as defined herein below and above, (particularly compounds of formula (IA), (IB), and (IC)) is one wherein the weight ratio between m and n is from 1 to 2.

In an embodiment, the perfluoropolyether as defined herein below and above, (particularly compounds of formula (IA), (IB), and (IC)) is one wherein:
m is an integer from 0 to 20;
n is an integer from 0 to 20;
with the proviso that when one of m or n is 0, then the other of m or n is other than 0;
being:
   the sum of m+n from 4 to 20; and
   the weight ratio between m and n is from 0.5 to 2.

In an embodiment, the perfluoropolyether as defined herein below and above, (particularly compounds of formula (IA), (IB), and (IC)) is one wherein:
m is an integer from 0 to 13;
n is an integer from 0 to 13;
with the proviso that when one of m or n is 0, then the other of m or n is other than 0;
being:
   the sum of m+n from 9 to 13; and
   the weight ratio between m and n is from 1 to 2.

Compounds of formula (IC) are commercially available. For example, FluoroSyl880^{®} marketed by Cytonix.

For the purpose of the present invention, the first aspect also refers to the use of a combination of one or more perfluoropolyethers having the formula (I) and one or more metals, inorganic oxides, and mixtures thereof (particularly inorganic metal oxide such as cerium oxide) as anti-insect adhesion agent, wherein the perfluoropolyether of formula (I) is one as disclosed herein above and below.

In an embodiment, the use of a combination of one or more perfluoropolyethers of formula (I) and one or more metals, inorganic oxides, and mixtures thereof is one wherein the metal(s) and/or inorganic oxide(s) are in a particulate form. The term "particulate" refers that a compound which is in form of powder. The term "powder" encompasses microparticles and nanoparticles of said compound. Particularly, the term "microparticles" refers to those particles having microscale dimensions (about 0.1 to 100 µm). And the term "nanoparticles" refers to those particles having nanoscale dimensions (about 1 to 100 nm). For the purpose of the invention, the particle size of said particles can be measured by any method known in the state of the art. For example, the measurement of the particle size of the nanoparticles is performed by transmission electron microscopy (TEM), Dynamic Light Scattering (DLS) and also measuring the BET surface area. For the purpose of the present invention, the particle size has been measured by BET surface area.

In an embodiment, In an embodiment, the use of a combination of one or more perfluoropolyethers of formula (I) and one or more metals, inorganic oxides, and mixtures thereof is one wherein the metal(s) and/or inorganic oxide(s) are in form of a sol. For the purpose of the invention the term "sol" refers to either a dispersion of colloidal particles of one phase in a fluid medium or a solution prepared by hydrolysis and polycondensation of metalorganic derivatives compounds or inorganic salts in alcoholic solution.

In an embodiment, the use of the combination of compound of formula (I) and one or more perfluoropolyethers of formula (I) and one or more metals, inorganic oxides, and mixtures thereof is one wherein the weight ratio between the perfluoropolyether and one or more metals, inorganic oxides, and mixtures thereof (particularly, inorganic metal oxide such as cerium oxide) is from 90:10 to 99.99:0.01. In an embodiment, the use of the combination of compound of formula (I) and one or more perfluoropolyethers of formula (I) and one or more metals, inorganic oxides, and mixtures thereof is one wherein the weight ratio between the perfluoropolyether and one or more perfluoropolyethers of formula (I) and one or more metals, inorganic oxides, and mixtures thereof (particularly, inorganic metal oxide such as cerium oxide) is from 98:2 to 99.9:0.01. The term "weight ratio" refers to the relation of weights of perfluoropolyether and one or more perfluoropolyethers of formula (I) and one or more metals, inorganic oxides, and mixtures thereof (particularly, inorganic metal oxide such as cerium oxide) needed to reduce the adhesion of insects on a surface.

In an embodiment, the use of the combination of the first aspect of the invention is selected from the group consisting of: (a) a combination of one or more perfluoropolyethers of formula (I) and one or more metals; (b) a combination of one or more perfluoropolyethers of formula (I) and one or more inorganic oxides; and (c) a combination of one or more perfluoropolyethers of formula (I), one or more metals, and one or more inorganic oxides.

In an embodiment, the use of the combination of the first aspect of the invention is (a) a combination of one or more perfluoropolyethers of formula (I) and one or more metals. In an embodiment, the use of the combination of the first aspect of the invention is (b) a combination of one or more perfluoropolyethers of formula (I) and one or more inorganic oxides. In an embodiment, the use of the combination of the first aspect of the invention is (c) a combination of one or more perfluoropolyethers of formula (I), one or more metals, and one or more inorganic oxides.

In an embodiment, the use of the combination of the first aspect of the invention is one as disclosed herein above and below wherein the metal is selected from the group consisting of copper, zinc, tin, cobalt, and mixtures thereof. For the purpose of the invention, the term "metal" refers to any of a number of chemical elements in the periodic table that form a metallic bond with other metal atoms; generally shiny, somewhat malleable and hard, often a conductor of heat and electricity.

In an embodiment, the use of the combination of the first aspect of the invention is one as disclosed herein above and below wherein the inorganic oxide is a metal oxide. In an embodiment, the use of the combination of the first aspect of the invention is one as disclosed herein above and below wherein the inorganic oxide is a metal oxide selected from the group consisting of alkali metal oxide, alkaline earth metal oxide, rare-earth metal oxide and mixtures thereof.

In an embodiment, the use of the combination of the first aspect of the invention is one as disclosed herein above and below wherein the inorganic oxide is a alkali metal oxide. In an embodiment, the use of the combination of the first aspect of the invention is one as disclosed herein above and below wherein the inorganic oxide is a alkali metal oxide and the alkaline metal is selected from the group consisting of lithium, sodium oxide, potassium, rubidium, caesium, francium, and mixtures thereof.

In an embodiment, the use of the combination of the first aspect of the invention is one as disclosed herein above and below wherein the inorganic oxide is a alkaline earth metal oxide. In an embodiment, the use of the combination of the first aspect of the invention is one as disclosed herein above and below wherein the inorganic oxide is a alkaline earth metal oxide and the alkaline earth metal is selected from the group consisting of beryllium, magnesium, calcium, strontium, barium, radium and mixtures thereof.

In an embodiment, the use of the combination of the first aspect of the invention is one as disclosed herein above and below wherein the inorganic oxide is a rare-earth metal oxide. In an embodiment, the use of the combination of the first aspect of the invention is one as disclosed herein above and below wherein the inorganic oxide is a rare-earth metal oxide being the rare-earth metal selected from the group consisting of lanthanides, actinides, and mixtures thereof. In an embodiment, the use of the combination of the first aspect of the invention is one as disclosed herein above and below wherein the inorganic oxide is a rare-earth metal oxide being the rare-earth metal selected from the group consisting of cerium, praseodymium, lanthanum, neodymium, samarium, gadolinium, and mixtures thereof. In an embodiment, the use of the combination of the first aspect of the invention is one as disclosed herein above and below wherein the inorganic oxide is the rare-earth metal, cerium oxide.

In an embodiment, the use of the combination of the first aspect of the invention is one as disclosed herein above and below wherein the inorganic oxide is a metalloid oxide. In an embodiment, the use of the combination of the first aspect of the invention is one as disclosed herein above and below wherein the inorganic oxide is a metalloid oxide being the metalloid selected from the group consisting of boron, silicon, germanium, arsenic, antimony, tellurium, carbon, aluminium, selenium, polonium, and astatine.

For the purpose of the invention, the term "inorganic oxide" refers to an oxide that do not contain carbon. In particular, the inorganic oxides of use in the present invention are selected from "inorganic metal oxide" and "inorganic metalloid oxide". For the purpose of the invention, the term "inorganic metal oxide" refers to an oxide that do not contain carbon and contain one or more metals as defined above. And the term "inorganic metalloid oxide" refers to an oxide that do not contain carbon and contain one or more metalloids. For the purpose of the present invention, the term "metalloid" refers to a chemical element that forms a simple substance having properties intermediate between those of a metal element and a non-metal element. Chemically, metalloids correspond to atoms having intermediate electronegativities which have the ability to display a range of both positive and negative oxidation states in their compounds. Examples of metalloids are those mentioned above, such as boron, silicon, germanium, arsenic, antimony, tellurium, carbon, aluminium, selenium, polonium, and astatine.

Particularly, for the purpose of the invention, the term inorganic metal oxide" encompasses "inorganic alkali metal oxide", "inorganic alkaline earth metal oxide" and "inorganic rare-earth metal oxide". For the purpose of the invention, the term "inorganic alkali metal oxide" refers to an oxide that do not contain carbon and contain at least one or more alkali metals. The term "alkali metal" refers to any one of the six chemical elements that forms Group 1 (Ia) of the periodic table of elements. The alkali metals are so called because reaction with water forming strong bases capable of neutralizing acids (also named alkalies). For the purpose of the invention, the term "inorganic alkaline earth metal oxide" refers to an oxide that do not contain carbon and contain at least one or more alkaline earth metals. The term "alkaline earth metal" refers to any one of the six chemical elements that forms Group 2 (IIa) of the periodic table of elements. For the purpose of the invention, the term "inorganic rare-earth metal oxide" refers to an oxide that do not contain carbon and contain at least one or more rare-earth metals. The term "rare-earth metal" refers to any one of the three chemical elements that forms Group 3 of the periodic table of elements; the lanthanide (or lanthanoid) series of chemical elements of the periodic table of elements comprising the 15 metallic chemical elements with atomic numbers 57-71; and the actinide (or actinoid) series of the periodic table of elements encompassing the 15 metallic chemical elements with atomic numbers from 89-103 of the periodic table of elements. Examples of rare-earth metals are cerium, praseodymium, lanthanum, neodymium, samarium, and gadolinium.

The second aspect of the invention refers to a composition comprising:
(a) one or more perfluoropolyethers of formula (I) as defined in the first aspect of the invention;
(b) one or more metals, inorganic oxides, and mixtures thereof; particularly inorganic metal oxide such as cerium oxide; and
(c) optionally, one or more excipients or carriers.

In an embodiment, the composition comprises:
(a) one or more perfluoropolyethers of formula (I) as defined in the first aspect of the invention; and
(b) one or more metals, inorganic oxides, and mixtures thereof; particularly inorganic metal oxide such as cerium oxide.

In an embodiment, the composition comprises:
(a) one or more perfluoropolyethers of formula (I) as defined in the first aspect of the invention;
(b) one or more metals, inorganic oxides, and mixtures thereof; particularly inorganic metal oxide such as cerium oxide; and
(c) one or more excipients or carriers.

As it is mentioned above, in an embodiment, the combination of the first aspect of the invention and the composition of the second aspect of the invention is one comprising cerium oxide. For the purpose of the invention, the term "cerium oxide" is the non-proprietary name cerium (IV) oxide of formula CeOz and whose CAS number is 1306-38-3. In an embodiment, the use of the combination of compound of formula (I) and cerium oxide is one wherein the cerium oxide in a particulate form. In an embodiment, the use of the combination of compound of formula (I) and cerium oxide is one wherein the cerium oxide is in form of nanoparticles. In an embodiment, the use of the combination of compound of formula (I) and cerium oxide is one wherein the cerium oxide is in form of nanoparticles having a particle size from 1 nm to 50 nm.

For the purpose of the invention, all embodiments mentioned herein above and below in relation to the first aspect of the invention for the perfluoropolyether of formula (I) and the one or more metals, inorganic oxides, and mixtures thereof (particularly inorganic metal oxide, such as cerium oxide) also apply for the composition of the second aspect of the invention.

In particular, in an embodiment, the composition of the invention comprises (a) one or more perfluoropolyethers of formula (I) selected from the group consisting of a perfluoropolyether of formula (IA), (IB) and (IC). In an embodiment, the composition of the invention comprises (a) the perfluoropolyethers of formula (IC).

In an embodiment, the composition of the invention comprises (a) from 90 to 99.99% by weight of one or more perfluoropolyethers of formula (I) as defined in the first aspect of the invention. In an embodiment, the composition of the invention comprises (a) from 98 to 99.99% by weight of one or more perfluoropolyethers of formula (I) as defined in the first aspect of the invention.

In an embodiment, the composition of the invention comprises (b) from 0.01 to 10 %% by weight of one or more metals, inorganic oxides, and mixtures thereof (particularly inorganic metal oxide, such as cerium oxide) as defined in the present invention. In an embodiment, the composition of the invention comprises (b) from 0.01 to 2% by weight of one or more metals, inorganic oxides, and mixtures thereof (particularly inorganic metal oxide, such as cerium oxide) as defined in the present invention.

In an embodiment, the composition of the invention comprises:
(a) from 90 to 99.99% of one or more perfluoropolyethers as defined in the present invention, particularly selected from the group consisting of formula (IA), (IB), and (IC); and
(b) from 0.01 to 10% of one or more metals, inorganic oxides, and mixtures thereof (particularly inorganic metal oxide, such as cerium oxide);
being the sum of the components up to 100.

In an embodiment, the composition of the invention comprises:
(a) from 98 to 99.99% of one or more perfluoropolyethers as defined in the present invention, particularly selected from the group consisting of formula (IA), (IB), and (IC); and
(b) from 0.01 to 2% of one or more metals, inorganic oxides, and mixtures thereof (particularly inorganic metal oxide, such as cerium oxide);
being the sum of the components up to 100.

In an embodiment, the composition of the invention comprises:
(a) from 90 to 99.99 of one or more perfluoropolyethers as defined in the present invention, particularly selected from the group consisting of formula (IA), (IB), and (IC);
(b) from 0.01 to 10% of one or more metals, inorganic oxides, and mixtures thereof (particularly inorganic metal oxide, such as cerium oxide); and
(c) one or more excipients or carriers;
being the sum of the components up to 100.

In an embodiment, the composition of the invention comprises:
(a) from 98 to 99.99% of one or more perfluoropolyethers as defined in the present invention, particularly selected from the group consisting of formula (IA), (IB), and (IC);
(b) from 0.01 to 2% of one or more metals, inorganic oxides, and mixtures thereof (particularly inorganic metal oxide, such as cerium oxide); and
(c) one or more excipients or carriers;
being the sum of the components up to 100.

As it is mentioned above, the composition of the second aspect of the invention can comprise one or more appropriate excipients and carriers. The appropriate excipients and carriers and their amounts can readily be determined by those skilled in the art according to the type of composition being prepared. Non-limiting examples of excipients or carriers include, but it is not limited to, solvents, co-solvents, pigments, UV shielding agents, antimicrobial agents, mechanical enhanced additives, anti-fouling agents, wetting agents, thickening agents, hardening agents, toughening agents, plasticizers, and stabilizers.

In an embodiment, the composition of the second of the invention is forming part of a painting composition, and varnishing composition.

It is also a part of the invention a process for the preparation of the composition of the second aspect of the invention. In an embodiment, the process for the preparation of the composition of the second aspect of the invention comprises providing a dispersion of the perfluoropolyether of formula (I) and one or more metals, inorganic oxides, and mixtures thereof (particularly inorganic metal oxide, such as cerium oxide); and optionally adding one or more additives (if present). In an embodiment, the process for the preparation of the composition of the second aspect of the invention comprises: firstly, providing a perfluoropolyether of formula (I); secondly, providing a dispersion of the perfluoropolyether of formula (I) and one or more metals, inorganic oxides, and mixtures thereof (particularly inorganic metal oxide, such as cerium oxide); and optionally adding one or more additives (if present).

All embodiments mentioned above for the perfluoropolyether of formula (I), the one or more metals, inorganic oxides, and mixtures thereof (particularly inorganic metal oxide, such as cerium oxide) and the appropriate excipients and carriers also applies herein for the process for the preparation of the composition of the second aspect of the invention. The appropriate reagents and amounts, as well as the experimental conditions can readily be determined by those skilled in the art according to the type of composition being prepared.

As it is mentioned above, the third aspect of the invention refers to a method for reducing the adhesion of insects on a surface which comprises coating the surface with the perfluoropolyether of formula (I), or the combination of the perfluoropolyether of formula (I) and one or more metals, inorganic oxides and mixtures thereof (particularly inorganic metal oxide, such as cerium oxide) as defined in the first aspect of the invention; or alternatively with the composition as defined in the second aspect of the invention. All embodiments mentioned in the present invention for the perfluoropolyether of formula (I) of the first aspect of the invention and/or for the composition of the second aspect of the invention, also apply herein for the method of the method of the third aspect of the invention.

In an embodiment, the method for reducing the adhesion of insects on a surface which comprises coating the surface by i) depositing the perfluoropolyether of formula (I), or the combination of the perfluoropolyether of formula (I) and one or more metals, inorganic oxides and mixtures thereof (particularly inorganic metal oxide, such as cerium oxide) as defined in the first aspect of the invention; or alternatively the composition as defined in the second aspect of the invention on the surface of the substrate to be coated, and ii) optionally, curing the coating obtained in step i).

In an embodiment, the method for reducing the adhesion of insects on a surface which comprises coating the surface by i) depositing the perfluoropolyether of formula (I), or the combination of the perfluoropolyether of formula (I) and one or more metals, inorganic oxides and mixtures thereof (particularly inorganic metal oxide, such as cerium oxide) as defined in the first aspect of the invention; or alternatively the composition as defined in the second aspect of the invention on the surface of the substrate to be coated, and ii) curing the coating obtained in step i).

In an embodiment, the method for reducing the adhesion of insects on a surface comprises coating the surface by i) depositing the perfluoropolyether of formula (I), or the combination of the perfluoropolyether of formula (I) and one or more metals, inorganic oxides and mixtures thereof (particularly inorganic metal oxide, such as cerium oxide) as defined in the first aspect of the invention; or alternatively the composition as defined in the second aspect of the invention on the surface of the substrate to be coated, wherein the perfluoropolyether of formula (I), or the combination of the perfluoropolyether of formula (I) and one or more metals, inorganic oxides and mixtures thereof (particularly inorganic metal oxide, such as cerium oxide) of the first aspect of the invention; or the composition of the second aspect of the invention is forming part of a painting composition and varnishing composition.

In an embodiment, the method for reducing the adhesion of insects on a surface wherein step i) is performed by dipping, spraying, painting (including paint brush and paint roller), casting, blade-coating, and spin-coating techniques.

As it is mentioned above, the method for reducing the adhesion of insects on a surface can comprise curing step ii). In an embodiment, the method for reducing the adhesion of insects on a surface comprises step ii), and it is performed by submitting the coated substrate obtained in step i) at a temperature from room temperature to 200 °C for an appropriate period of time. In an embodiment, the method for reducing the adhesion of insects on a surface comprises step ii) and it is performed by submitting the coated substrate obtained in step i) at a temperature from 80 °C to 170 °C; particularly from 100°C to 150°C and for a period of time up to 24 h. The term "room temperature" refers to a temperature of about 20 to 35°C; particularly from 20 to 25°C.

In an embodiment, the method of reducing the adhesion of insects is one wherein the surface is made of a natural, semisynthetic and/or synthetic material. In an embodiment, the method of reducing the adhesion of insects is one wherein the surface is made of one or more materials selected from the group consisting of metal, wood, glass, plastic, ceramic, oligo- or poly- saccharide based materials (such as cellulose) and alloy.

In an embodiment, the method of reducing the adhesion of insects is one wherein the surface is made of one or more layers (including mono-layered, bi-layered, and multilayered); and composite.

In an embodiment, the method of reducing the adhesion of insects is one wherein the surface belongs to equipment of a sector selected from the group consisting of aviation, automotive, maritime, railway, and renewable energy sector. Examples of equipment include, but it is not limited to, glassed areas and fuselage of aircraft, car, train, wind towers, and solar plant; as well as workers' clothing and tools and/or machinery used in said sectors such as glasses, and helmets.

In an embodiment, the method of the third aspect of the invention further comprises a previous step prior to step i) which comprises conditioning the substrate. The conditioning step of the substrate facilitates the deposition and/or coating steps. Regarding the nature of the substrate, the conditioning step is performed by using the corresponding technics known in the state of the art such as for example degreasing, cleaning, and/or activating of the substrate.

The appropriate preparation/pre-treatment conditions can readily be determined by those skilled in the art according to the type of substrate being used. Examples of appropriate pre-treatment conditions for the present invention are disclosed in the experimental section. In a particular embodiment, when the substrate is stainless steel then, the conditioning steps comprises a cleaning step followed by an activating acidic step of the substrate. In a particular embodiment, when the substrate is glass then, the conditioning steps comprises a cleaning step followed by a basic step of the substrate. Example of known technics used for performing the conditioning step of the substrate can be, among others, plasma cleaning, UV-Ozone cleaning, ultrasonically cleaning and wet-chemical cleaning.

The fourth aspect of the invention refers to a coated substrate obtainable by the process comprising: i) depositing the combination of perfluoropolyether and one or more metals, inorganic oxides and mixtures thereof (particularly inorganic metal oxide, such as cerium oxide) as defined in the first aspect of the invention; or alternatively, the composition comprising perfluoropolyether and one or more metals, inorganic oxides and mixtures thereof (particularly inorganic metal oxide, such as cerium oxide) as defined in the second aspect of the invention over the substrate; and ii) optionally, curing the coating obtained in step i). All embodiments mentioned above and below of the first and the second aspect of the invention, as well as the method for reducing the adhesion of insects mentioned in the third aspect of the invention also apply for the fourth aspect of the invention. The purposes of the invention the expressions "obtainable", "obtained" and equivalent expressions are used interchangeably, and in any case, the expression "obtainable" encompasses the expression "obtained".

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein. This project has received funding from the Clean Sky 2 Joint Undertaking (JU) under grant agreement No 864769. The JU receives support from the European Union's Horizon 2020 research and innovation programme and the Clean Sky 2 JU members other than the Union.

### Examples

### 1. Compositions

Table 1 shows the quantitative components intervening in the preparation of anti-insect coating compositions comprising only the perfluoropolyether (PFPE) of formula (IB) falling within the scope of the perfluoropolyether of formula (I) of the invention (Example 1), or the combination of the perfluoropolyether of formula (IB) with one or more metals, inorganic oxides, and mixtures thereof (particularly inorganic metal oxide, such as cerium oxide) of the invention (Example 2).

Table 1 also shows the quantitative components intervening in the preparation of comparative coating compositions comprising silane based coating agents structurally different than the perfluoropolyether of formula (I) and, therefore, falling outside the scope of the present invention (comparative Examples 1-3).

The amount of the components in Table 1 is expressed in weight percent in relation to the total weight of the silane-based coating agent.

**Table 1**

| **Ingredients** | | **Ex.1** | **Ex.2** | **Comp. Ex.1** | **Comp. Ex.2** | **Comp. Ex.3** |
|---|---|---|---|---|---|---|
| **Silane based component** | PFPE (IC)^{(a)} | 100 | 99 | - | - | - |
| | Perfluoro(polypropyleneoxy) Methoxypropyl trimethoxysilane | - | - | 100 | - | - |
| | Poly(dimethylsiloxane), monoglycidylether (PDMS-epoxy) | - | - | - | 100 | - |
| | Polydimethyldimethoxysilane | - | - | - | - | 100 |
| **Cerium oxide** | CeO₂ | - | 1 | - | - | |

| | | | | | | |
|---|---|---|---|---|---|---|
| (a) In form of a mixture containing 99% of the perfluoropolyether of formula (IC), 0.8% wt. of water, and 0.2% wt. of hydrochloric acid. | | | | | | |

### 2. Coated substrates

### 2.1. Preparation Process

### 2.1.1. Pre-treatment of the substrate

Prior to the coating, the surface of the substrates to be coated (i.e. glass) is cleaned and activated.

The **cleaning process** involves a washing step with soap and thoroughly rinsing with water.

The **activating process** involves the following steps:
- Glass substrates. Glass substrates were immersed into deionized water, isopropanol, and acetone successively under sonication for 5 min each. With the aim to generate hydroxyl groups at the surface prone to promote covalent bonds between the surface and the silanol groups of the coating molecules, the cleaned substrates were activated by immersion in 10 wt.% aqueous NaOH solution. Plasma treatment can also be used for this purpose.

### 2.1.2. Coating of the substrate

### 2.1.2.1. General process for the preparation of coated substrates without cerium oxide

### Example 1

The coating was prepared by immersion of the substrate (i.e. steel and glass) into a 0.2 wt. % isopropanol solution containing the compound of formula (IC), 0.8 wt. % of water and 0.2 wt. % of hydrochloric acid (10 %) for 5 minutes or 30 minutes. After that, a thermal curing process was performed in two steps: firstly, 15 minutes at 100 °C; and secondly, 15 minutes more at 150 °C.

### Comparative Examples 1-3

The comparative examples 1-3 were prepared following the process as disclosed herein below.

Comparative Example 1: was performed by drop-casting a 0.1 wt. % of the perfluoro(polypropyleneoxy) Methoxypropyl trimethoxysilane dispersion in perfluorotripentylamine (commercially available as FC-70). The resultant dispersion was applied on the surface of the substrate ensuring that the substrate was completely covered. After that, they were stored in an oven with saturated humidity conditions at 60 °C for 3 hours to promote the hydrolysis of the perfluoro silane. Finally, an additional thermal treatment at 100 °C was carried out for 3 hours.

Comparative Example 2: PDMS-epoxy was applied on the surface of the substrate ensuring it is completely soaked and heating at 80 °C for 6 h. The substrate was then rinsed with toluene and isopropanol.

Comparative Example 3: A 10 wt. % dimethyldimethoxysilane dispersion in isopropanol with 1 wt. % sulfuric acid were applied with a pipet to a tilted substrate.

### 2.1.2.2. General process for the preparation of coated substrates with one or more metals, inorganic oxides, and mixtures thereof (particularly inorganic metal oxide, such as cerium oxide)

### Example 2

To prepare the precursor formulation, 1 wt.% of CeOz nanoparticles was incorporated to an isopropanol bath. When the solid was completely dispersed, using a sonication bath, a 0.2 wt. % of Fluorolink S10, a 0.8 wt. % of water and 0.2 wt. % of hydrochloric acid (10 % w/v in water)) were added.

After that, the coating application on previously pre-cleaned and pre-activated substrate (i.e. glass and steel) was performed by the immersion of the substrate on the previously obtained precursor formulation, for 5 minutes or 30 minutes. After that time, a thermal curing process was performed in two steps: firstly, 15 minutes at 100 °C; and secondly, 15 minutes more at 150 °C.

### 2.2. Coated substrates

The coated substrates (i.e. CS Ex. 1-4) obtained using the compositions of Examples 1-2 comprising at least a perfluoropolyether of formula (I), and the comparative Examples 1-3 (without the compound of formula (I)) onto glassed substrate are summarized in Table 2 herein below:

**Table 2**

| **Coated substrate (CS)** | **Silane based composition** | **Immersing time (min)** |
|---|---|---|
| CS Ex.1 | Ex.1 | 5 |
| CS Ex.2 | Ex.1 | 30 |
| CS Ex.3 | Ex.2 | 5 |
| CS Ex.4 | Ex.2 | 30 |
| Comp. CS Ex.1^{(a)} | Comp Ex.1 | NA^{(a)} |
| Comp. CS Ex.2^{(a)} | Comp Ex. 2 | NA^{(a)} |
| Comp. CS Ex.3^{(a)} | Comp Ex. 3 | NA^{(a)} |

| | | |
|---|---|---|
| ^{(a)} not applicable, comparative coated substrates were not prepared by immersion (see section 2.1.2.1. | | |

### 3. Anti-insect adhesion Test

The aim of this test is to analysis the reduction of the amount of proteins coming from the haemolymph adsorbed on the surface of a glass substrate after the use (application) of at least one perfluoropolyether of formula (I) of the present invention.

### 3.1. Material and method

Two droplets of 10ul of centrifuged haemolymph from bumblebees were deposited on the surfaces to be tested. After 30 min (Experiment 1) or 100 min (Experiment 2) of exposition at room temperature, the spot was washed with consecutively every 3 minutes with 20µl of water, 20µl phosphate buffer salt (PBS), 20µl Guanidinium hydrochloride 6M and 20µl 70% acetonitrile in water.

Those washes allow removing from the surface of the substrate proteins of different polarities after each wash (i.e. for example, the removal of hydrophilic proteins with water, and of ionic proteins with PBS). Finally, a trypsinolysis step was realized to extract the most adsorbed proteins on the surfaces. The trypsinolysis step involves the treatment of the substrate with trypsin.

The composition of each sample generated after the first wash with water and the last wash with trypsinolysis was analysed by LC-MS/MS with ABSciex TT6600. A maximum of 2µg of each sample containing the washed peptides is injected and separated on the LC device and then are analyzed and detected by the MS instrument. The data generate by MS are compare against the *Bombus terrestris* proteome with the Protein Pilot software (i.e. AB Sciex ProteinPilotTM 5.0 and PeakViewTM 2.2 softwares). After the analysis, the results gave a list of identified proteins. Only proteins detected with a minimum of 2 peptides are conserved for the statistical analyses.

From the list of proteins, the emPAI are calculated following the method disclosed by Yasushi Ishihama et al. in "Exponentially modified protein abundance index (emPAI) for estimation of absolute protein amount in proteomics by the number of sequenced peptides per protein" 2005. Mol. Cell. Proteomics vol. 4(9), pp. 1265-1272. The number of detected proteins and the emPAI value are normalized based on the total sum. And the macromolecular diversity correlated to the number of detected proteins and the macromolecular abundance to the emPAI values were measured.

### 3.2. Samples

The tested samples are listed herein below:
Experiment 1 (30min)
   - Comparative samples: Comp. CS Ex.1, Comp. CS Ex.1, and Comp. CS Ex.3,
   - Samples of the invention: CS Ex.1
Experiment 2 (100min)
   - Comparative samples: naked glass
   - Samples of the invention: CS Ex.1, CS Ex. 2, CS Ex.3, and CS Ex.4

### 3.3. Results

### 3.3.1. Protein adsorption quantification

The protein's adsorption was quantified using the method mentioned above after performing experiments 1 and 2 separately. The number of proteins with a minimum of 2 peptides were quantified after the water washing step and after the trypsinolysis wash and summarized in Table 3 and Table 4 below:

**Table 3**

| **Substrate** | **Number of proteins with a minimum of 2 peptides** | |
|---|---|---|
| | **After water washing** | **After trypsinolysis washing** |
| **Experiment 1 (30min)** | | |
| **CS Ex.1** | **64** | **3** |
| **Comp. CS Ex.1** | **88** | **46** |
| Comp. CS Ex.2 | 97 | 7 |
| Comp. CS Ex.3 | 198 | 104 |

**Table 4**

| **Substrate** | **Number of proteins with a minimum of 2 peptides** | |
|---|---|---|
| | **After water washing** | **After water washing** |
| **Experiment 2 (100min)** | | |
| Naked glass | **96** | **57** |
| CS Ex.1 | 81 | 37 |
| CS Ex.2 | 83 | 28 |
| CS Ex.3 | 83 | 28 |
| CS Ex.4 | 94 | 23 |

### 3.3.2. The macromolecular abundance

The macromolecular abundance of the % of detected peptides after water washing step was calculated by the emPAI method and summarised herein below in Table 5:

**Table 5**

| **Substrate** | **macromolecular abundance after water washing** |
|---|---|
| **Experiment 2 (100min)** | |
| Naked glass | Cleaning about 40% of proteins |
| CS Ex.2 | Cleaning about 55% of proteins |
| CS Ex.4 | Cleaning about 70% of proteins |

### 3.4. Conclusion

As it is demonstrated in the results of Table 3, the use of a compound of formula (I) according to the present invention allows an unexpected reduction of the protein adsorbed on a substrate, especially when the trypsinolysis fraction is analyzed.

In fact, the use of the bifunctional substituted compound of formula (I) according to the present invention (compositions of Example 1 and 2) allows having an unexpected higher reduction than the comparative silane based compositions disclosed in the state of the art. In fact, the bifunctional substituted compound of formula (I) allows having an unexpected much higher than the comparative perfluoropolyether comprising an unique terminal silane moiety (see. Comparative Example 1). Furthermore, the use of the compound of Formula (I) also allows an unexpected reduction of the adsorbed proteins on the surface of glass, by reducing the interaction forces between proteins and substrate.

On the other hand, an enhanced reduction of the adsorption of proteins on the tested substrates were also shown, when the compound of formula (I) of the present invention is use in combination with one or more metals and/or inorganic oxides (particularly inorganic metal oxide, such as cerium oxide). As it is shown in Table 4, composition of Example 2 which comprises perfluoropolyether of formula (I) and a 1% of cerium oxide (i.e. CS Ex. 10 and CS Ex. 14) allows reducing within 5-10% more the number of adsorbed proteins on the surface of glass substrates (cf. CS Ex.1 vs CS Ex. 3: from 37% to 28%; and CS Ex. 2 vs CS Ex. 4: from 28% to 23%).

Furthermore, as it is shown in the macromolecular abundance values, the application on a substrate of the compound of formula (I) of the present invention alone or in combination with one or more metals and/or inorganic oxides (particularly inorganic metal oxide, such as cerium oxide) allow cleaning with a water washing about 55% and 70% respectively the number of proteins deposited on the surface of the substrate. Meanwhile, a water washing step only allows cleaning about 40% of the proteins. Therefore, from that results it can be concluded that the perfluoropolyether of formula (I) of the present invention has enhanced easy-to-clean properties; having a much more unexpected cleaning effect when the perfluoropolyether of formula (I) is used in combination with one or more metals and/or inorganic oxides (particularly inorganic metal oxide, such as cerium oxide).

Therefore, with all the above mentioned results, it is demonstrated that the unexpected and surprisingly alleged effect of the reduction of adsorbed proteins and easy-to-clean properties by the use of the compound of formula (I) according to the present invention does not depend on the thickness of the coating. In fact, the unexpected reduction is observed even of immersing the substrate for 5 or 30min.

### Citation List

1. Yasushi Ishihama et al. in "Exponentially modified protein abundance index (emPAI) for estimation of absolute protein amount in proteomics by the number of sequenced peptides per protein" 2005. Mol. Cell. Proteomics vol. 4(9), pp. 1265-1272.

## Claims

1. Use of one or more perfluoropolyethers of formula (I) 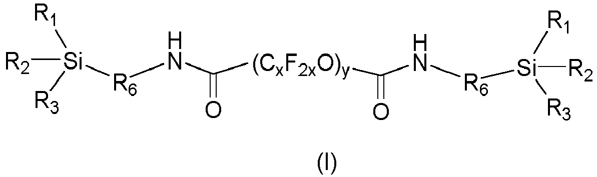
or alternatively,
use of a combination of one or more perfluoropolyethers of formula (I) and one or more metals, inorganic oxides, and mixtures thereof;
as an anti-insect adhesion agent;
wherein:
x is an integer from 1 to 6;
y is an integer from 2 to 500;
each R₁, R₂, and R₃ are independently selected from the group consisting of halogen, - OH, -(C₁-C₃₀)alkyl, and -O(C₁-C₃₀)alkyl, with the proviso that at least one of R₁, R₂ or R₃ is -OH or -O(C₁-C₃₀)alkyl;
R₆ is selected from the group consisting of (CR₇R₈)ₚ and (CR₉R₁₀O)_{q};
each R₇, R₈, R₉ and R₁₀ are independently selected from the group consisting of H, -(C₁-C₁₂)alkyl; -(C₂-C₁₂)alkenyl; -(C₂-C₁₂) alkylene-O-(Y-O)_{w}-(C₁-C₁₂)alquil, -(C₂-C₁₂) alkylene-O-(Y-O)_{w}-(C₂-C₁₂)alkylene-NR₁₁R₁₃, -(C₂-C₆)alkynyl; -Cy1; -(C₁-C₁₂)alkylene-Cy1; -(C₂-C₁₂)alkenylene-Cy1; -(C₂-C₁₂)alkynylene-Cy1; -Cy2-(C₁-C₁₂)alkyl; -Cy2-(C₂-C₁₂)alkenyl;
and -Cy2-(C₂-C₁₂)alkynyl; being Cy1 a known ring system independently selected from the group consisting of 5- to 7-membered saturated or partially unsaturated carbocyclic or
heterocyclic ring; and 5- to 7-membered carbocyclic or heterocyclic aromatic ring; Cy2 a bivalent known ring system independently selected from the group consisting of 5- to 7-membered saturated or partially unsaturated carbocyclic or heterocyclic ring; and 5- to 7-membered carbocyclic or heterocyclic aromatic ring; and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl;
p is an integer from 1 to 20;
q is an integer from 1 to 20; and
the inorganic oxide is selected from the group consisting of metal oxide, metalloid oxide, and mixtures thereof.

2. The use according to claim 1, wherein:
x is an integer from 1 to 6;
y is an integer from 2 to 500;
R₆ is (CR₇R₈)ₚ;
each R₇, and R₈ are independently selected from the group consisting of H, -(C₁-C₁₂)alkyl;
and being each one optionally substituted by one or more groups consisting of OH, halogen, NH₂, NHR₅, NR₅R₆, -(C₁-C₆)alkyl, NO₂, N₃, -(C₁-C₁₂)alkyl, -O-(C₁-C₁₂)alkyl, -CO-(C₁-C₁₂)alkyl and -CO-O-(C₁-C₁₂)alkyl;
R₁, R₂, and R₃ are -O(C₁-C₃₀)alkyl; and
p is an integer selected from 1 to 20;
particularly, wherein:
x is an integer from 1 to 6;
y is an integer from 2 to 500;
R₆ is (CR₇R₈)ₚ;
R₇ and R₈ are H;
R₁, R₂, and R₃ are -O(C₁-C₃₀)alkyl;
each R₁, R₂, and R₃ are independently -O(C₁-C₃₀)alkyl; and
p is an integer from 1 to 6.

3. The use according to any of the claims 1-2, wherein (CxF2xO)y is a moiety of formula (II) 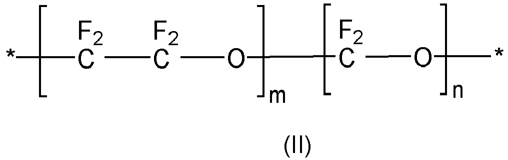
m is an integer from 0 to 500; and
n is an integer from 0 to 500,
with the proviso that:
when one of m or n is 0, then the other of m or n is other than 0, and
being the sum of m+n up to 500;
and particularly; a moiety of formula (III) 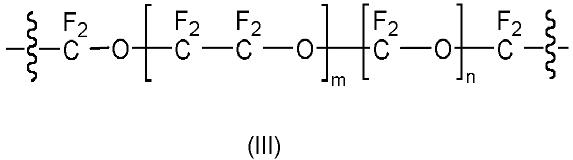
m is an integer from 0 to 500; and
n is an integer from 0 to 500,
with the proviso that when one of m or n is 0, then the other of m or n is other than 0, and
being the sum of m+n up to 500.

4. The use according to any of the claims 1-3, wherein the one or more perfluoropolyethers are compounds of formula (IA) 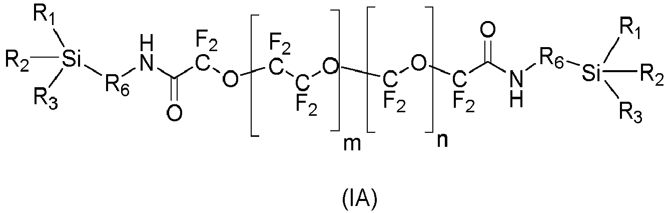 wherein
R₁, R₂, R₃, R₆, m, and n are as defined in any of the claims 1-3;
particularly, the one or more perfluoropolyethers of formula (I) are compounds of formula 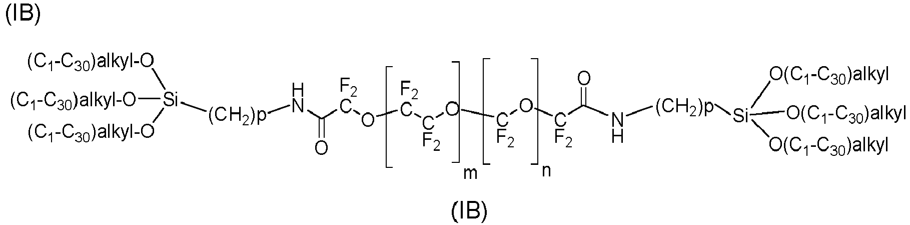 wherein:
m is an integer from 0 to 400;
n is an integer from 0 to 400;
with the proviso that when one of m or n is 0, then the other of m or n is other than 0;
being the sum of m+n up to 400; and
p is an integer from 1-6;
and particularly, the one or more perfluoropolyethers of formula (I) are compounds of 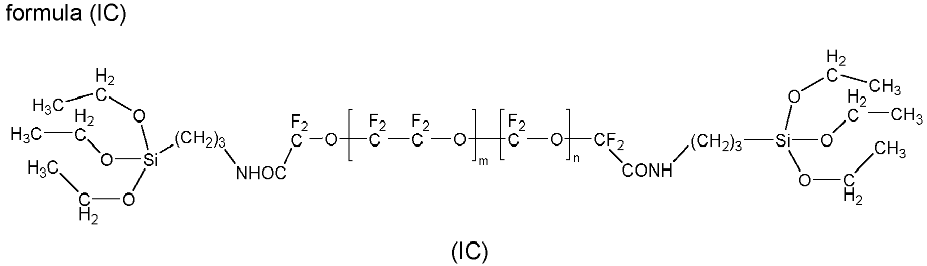 wherein:
m is an integer from 0 to 400;
n is an integer from 0 to 400;
with the proviso that when one of m or n is 0, then the other of m or n is other than 0, and
being the sum of m+n up to 400.

5. The use according to any of the claims 3-4, where in the one or more perfluoropolyethers of formula (I):
m is an integer from 0 to 200;
n is an integer from 0 to 200;
with the proviso that when one of m or n is 0, then the other of m or n is other than 0, and
being the sum of m+n up to 200;
particularly;
m is an integer from 0 to 100;
n is an integer from 0 to 100;
with the proviso that when one of m or n is 0, then the other of m or n is other than 0, and
being the sum of m+n from 3 to 100;
particularly;
m is an integer from 0 to 20;
n is an integer from 0 to 20;
with the proviso that when one of m or n is 0, then the other of m or n is other than 0, and
being the sum of m+n from 4 to 20;
particularly;
m is an integer from 0 to 15;
n is an integer from 0 to 15;
with the proviso that when one of m or n is 0, then the other of m or n is other than 0, and
being the sum of m+n from 6 to 15;
particularly;
m is an integer from 0 to 13;
n is an integer from 0 to 13;
with the proviso that when one of m or n is 0, then the other of m or n is other than 0, and
being the sum of m+n from 9 to 13.

6. The use according to any of the claims 3-5, wherein:
the weight ratio between m and n is from 0.5 to 2;
Particularly, the weight ratio between m and n is from 1 to 2.

7. The use according to any of the claims 3-6, wherein:
m is an integer from 0 to 20;
n is an integer from 0 to 20;
with the proviso that when one of m or n is 0, then the other of m or n is other than 0;
being:
the sum of m+n from 4 to 20; and
the weight ratio between m and n is from 0.5 to 2;
particularly;
m is an integer from 0 to 13;
n is an integer from 0 to 13;
with the proviso that when one of m or n is 0, then the other of m or n is other than 0;
being:
the sum of m+n from 9 to 13; and
the weight ratio between m and n is from 1 to 2.

8. The use according to any of the claims 1-7, wherein the anti-insect adhesion agent is a haemolymph anticoagulant agent.

9. The use according to any of the claims 1-8, which is the use of a combination of one or more perfluoropolyethers of formula (I) and one or more metals, inorganic oxides, and mixtures thereof;
wherein:
the metal and/or inorganic oxide is in form of nanoparticles; particularly, having a particle size from 1 nm to 50 nm; and/or
the weight ratio between the perfluoropolyether and the one or more metals, inorganic oxides, and mixtures thereof is from 90:10 to 99.99:0.01.

10. The use according to any of the claims 1-9, which is the use of a combination selected from the group consisting of:
(a) a combination of one or more perfluoropolyethers of formula (I) and one or more metals;
(b) a combination of one or more perfluoropolyethers of formula (I) and one or more inorganic oxides; and
(c) a combination of one or more perfluoropolyethers of formula (I), one or more metals, and one or more inorganic oxides.

11. The use according to any of the claims 1-10, wherein:
- the metal is selected from the group consisting of zinc, copper, tin, cobalt, and mixtures thereof;
- the inorganic oxide is a metal oxide; particularly selected from the group consisting of alkali metal oxide, alkaline earth metal oxide, rare-earth metal oxide and mixtures thereof;
- the inorganic oxide is a alkali metal oxide, wherein the alkali is selected from the group consisting of lithium, sodium oxide, potassium, rubidium, caesium, francium, and mixtures thereof;
- the inorganic oxide is a alkaline earth metal oxide; particularly, the alkaline earth metal is selected from the group consisting of beryllium, magnesium, calcium, strontium, barium, radium and mixtures thereof;
- the inorganic oxide is a rare-earth metal oxide; particularly, the rare-earth metal is selected from the group consisting of lanthanides, actinides, and mixtures thereof; and
- the inorganic oxide is a metalloid oxide; particularly, the metalloid is selected from the group consisting of boron, silicon, germanium, arsenic, antimony, tellurium, carbon, aluminium, selenium, polonium, and astatine.

12. The use according to any of the claims 1-11, which is the use of a combination comprising one or more perfluoropolyether of formula (I) and at least one inorganic oxide being a rare-earth metal oxide;
Particularly, which is the use of a combination comprising one or more perfluoropolyether of formula (I) and at least one inorganic oxide being a rare-earth metal oxide, wherein the rare-earth metal is selected from the group consisting of cerium, praseodymium, lanthanum, neodymium, samarium, gadolinium, and mixtures thereof; and
Particularly, which is the use of a combination comprising one or more perfluoropolyether of formula (I) and at least one inorganic oxide being the rare-earth metal oxide cerium oxide.

13. A composition comprising:
(a) one or more perfluoropolyethers of formula (I) as defined in any of the claims 1-7;
(b) one or more metals, inorganic oxides, and mixtures thereof as defined in any of the claims 1-12; and
(c) optionally, one or more excipients or carriers:
particularly;
(a) from 90 to 99.99 % by weight of one or more perfluoropolyethers as defined in any of the claims 1-7 in relation to the total weight of the composition;
(b) from 0.01 % to 10 % by weight of one or more metals, inorganic oxides and mixtures thereof as defined in any of the claims 1-12 in relation to the total weight of the composition; and
(c) optionally, one or more excipients or carriers;
being the sum of the components up to 100.

14. A method for reducing the adhesion of insects on a surface which comprises coating the surface with:
one or more perfluoropolyethers as defined in any of the claims 1-7; or alternatively,
the combination of the one or more perfluoropolyethers and one or more metals, inorganic oxides and mixtures thereof as defined in any of the claims 1-12; or alternatively,
the composition as defined in claim 13;
particularly, wherein:
the surface is made of one or more materials selected from the group consisting of metal, wood, glass, plastic, ceramic, oligo- or poly- saccharide based materials, and alloy; and/or
the surface belongs to equipment of a sector selected from the group consisting of aviation, automobile, maritime, railway, and renewable energy sector.

15. A coated substrate obtainable by the process comprising:
i) depositing the combination of one or more perfluoropolyethers and one or more metals, inorganic oxides and mixtures thereof as defined in any of the claims 1-12; or alternatively, the composition comprising one or more perfluoropolyethers and one or more metals, inorganic oxides and mixtures thereof as defined in any of the claims 1-12 over the substrate; and
ii) optionally, curing the coating obtained in step i).
